# EUROPEAN PATENT APPLICATION

(11) **EP 2 161 861 A2**
(43) Date of publication of application: **10.03.2010**
(21) Application number: 09169080.0
(22) Date of filing: 31.08.2009
(51) Int. Cl.: H04H 20/51

(54) **Receiver device and method of receiving a plurality of signals**

(30) Priority: 09.09.2008 US 283027
(71) Applicant: Delphi Technologies, Inc., Troy MI 48007 (US)
(72) Inventor: Walker, Glenn A., Greentown, IN 46936 (US); Morris, Daniel G., Ovid, MI 48866 (US)
(74) Representative: Denton, Michael John

(57) **Abstract**

A receiver device (12) and method (100) ofreceiving a plurality of signals are provided, wherein the receiver device (12) includes at least one antenna element (A₁...A_{N}), and circuitry (20) in communication with the at least one antenna element (A₁...A_{N}). The at least one antenna element (A₁...A_{N}) is configured to receive at least a first signal having a first polarization and a second signal having a second polarization, wherein the first polarization is different than the second polarization. The circuitry (20) is configured to process and emit an output (22) based upon at least one of the received first and second signals, wherein the first signal is received at a first reception elevation angle with respect to the at least one antenna element (A₁...A_{N}) that is greater than a second reception elevation angle of the second signal with respect to the at least one antenna element (A₁...A_{N}), and the first and second signals are transmitted at substantially the same frequency.

## Description

### Technical Field

The present invention generally relates to a receiver device, and more particularly, a receiver device that receives multiple signals transmitted at substantially the same frequency.

### Background of the Invention

Generally, vehicles can be equipped with satellite radio receivers as an alternative to, or in combination with, common traditional terrestrial radio receivers. Additionally, satellite radio receivers can be used in places other than vehicles, such as handheld devices. Generally, satellite radio systems are designed, such that the receiver receives a satellite radio frequency (RF) signal from a satellite and a terrestrial RF signal from a terrestrial repeater or a transponder, which typically provides system redundancy.

The current systems in operation in the U.S. generally use double redundant information to enable high signal availability to receivers. These systems typically use time and spatial redundancy for the satellite signals, such that the signal is transmitted from two sources. Typically, in urban areas, terrestrial repeaters can provide a third signal source. Generally, such systems use different frequencies for the satellite signal and the terrestrial repeater signal. This architecture generally reduces the bandwidth efficiency of the system by one-third (1/3), while increasing overall availability.

Due to current European regulations, the European satellite radio system currently has twenty-three (23) contiguous frequencies across a forty megahertz (40 MHz) frequency band. Generally, there are seven (7) frequencies that are designated for hybrid systems only, which include the transmission of the satellite RF signal and the terrestrial RF signal. Typically, the current European satellite radio system is constrained to frequency bandwidths of 1.712 MHz.

With multiple satellites, it can be a problem to receive signals from one satellite and then receive signals from another satellite at the same frequency due to the differing locations of the satellites with respect to the receiver. One exemplary system generally includes a receiver having an antenna element that receives signals at the same frequency, wherein the antenna element has a very high gain (e.g., beam steered). By including such a high gain antenna element, the signals can be separated, along with polarization. Typically, such an exemplary system transmits satellite television signals that are received by the antenna element.

### Summary of the Invention

According to one aspect of the present invention, a receiver device includes at least one antenna element and circuitry in communication with the at least one antenna element. The at least one antenna element is configured to receive at least a first signal having a first polarization and a second signal having a second polarization, wherein the first polarization is different than the second polarization. The circuitry is configured to process and emit an output based upon at least one of the received first and second signals, wherein the first signal is received at a reception elevation angle with respect to the at least one antenna element that is greater than a reception elevation angle of the second signal with respect to the at least one antenna element, and the first and second signals are transmitted at substantially the same frequency.

According to another aspect of the present invention, a method of receiving a plurality of signals includes the steps of receiving a first signal having a first polarization by at least one antenna element, and receiving a second signal having a second polarization that is different than the first polarization, wherein the first signal is received at a first reception elevation angle with respect to the at least one antenna element that is greater than a second reception elevation angle of the second signal with respect to the at least one antenna element. The method further includes the step of emitting an output based upon at least one of the received first and second signals, wherein the first and second signals are transmitted at substantially the same frequency.

### Brief Description of the Drawings

The present invention will now be described, by way of example, with reference to the accompanying drawings, in which:

Fig. 1 is an environmental view of a communications system that includes a receiver device, in accordance with one embodiment of the present invention;

Fig. 2 is a diagram illustrating an exemplary orbital path of highly elliptical orbiting satellites, in accordance with one embodiment of the present invention;

Fig. 3 is a block diagram of a receiver device, in accordance with one embodiment of the present invention;

Fig. 4 is a block diagram of a receiver device, in accordance with another embodiment of the present invention;

Fig. 5 is a diagram illustrating the reception characteristics of signals having different polarizations and being received at different reception elevation angles with respect to at least one antenna element, in accordance with one embodiment of the present invention; and

Fig. 6 is a flow chart illustrating a method of receiving a plurality of signals, in accordance with one embodiment of the present invention.

### Description of Preferred Embodiments

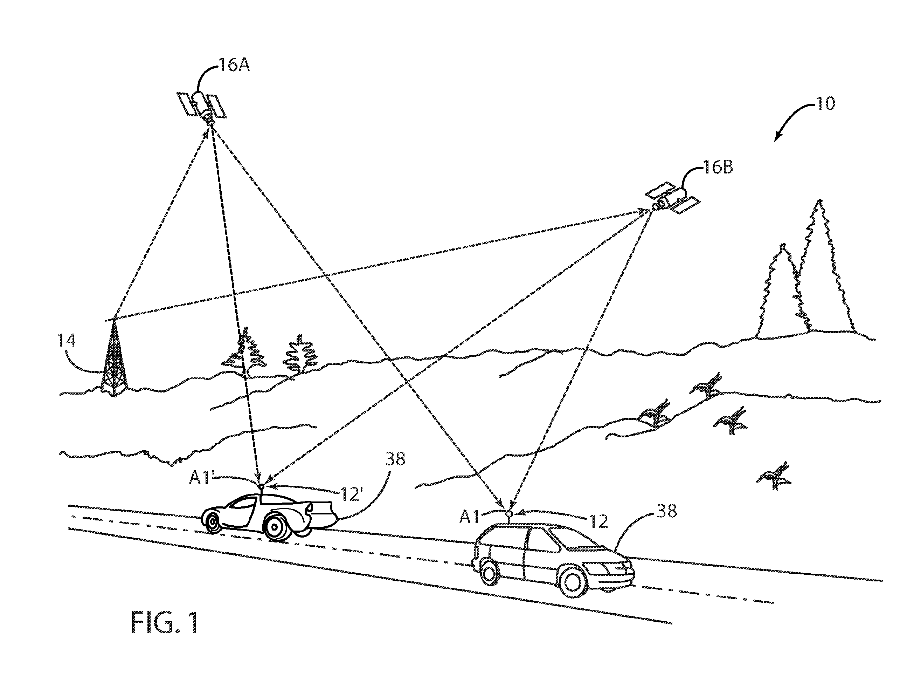

In regards to Fig. 1, a communications system is generally shown at reference identifier 10. The communications system 10 includes at least one receiver device generally indicated at 12, which includes at least one antenna element A₁, and is configured to receive a first signal having a first polarization and a second signal having a second polarization that is different than the first polarization. Typically, the first signal is received by the first antenna element A₁ at a first reception elevation angle with respect to the first antenna element A₁ that is greater than a second reception elevation angle at the second signal with respect to the antenna element A₁, and the first and second signals are transmitted at substantially the same frequency. Thus, different data (e.g., high priority data and low priority data) can be transmitted on the first and second signals, while the first and second signals are being transmitted at substantially the same frequency, such that the spectral efficiency of the communications system 10 is increased, as described in greater detail herein.

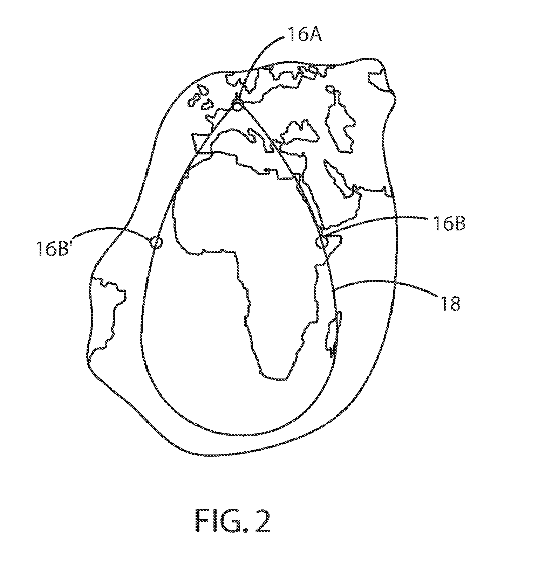

According to one embodiment, the first and second signals are transmitted by a transmitter 14, such that the first signal is received and re-transmitted by a first satellite 16A, and the second signal is received and re-transmitted by a second satellite 16B (i.e., rising and/or falling satellite). With respect to Fig. 2, the first satellite 16A and the second satellite 16B are indentified based upon the orbital location of the satellite 16A,16B in an orbital path 18. Typically, the first satellite 16A is the satellite that has the higher elevation angle with respect to the antenna element A₁ when compared to the elevation angle of the second satellite 16B. Thus, the satellite 16A,16B that receives and re-transmits the first signal is continuously being altered as the satellites 16A,16B continue to travel along the orbital path 18. It should be appreciated by those skilled in the art that more than two satellites 16A,16B can be orbiting in the orbital path 18, such that a third satellite 16B' (i.e., rising and/or falling satellite) can receive and re-transmit the second signal or be inactive. Additionally, one or more terrestrial repeaters can be used to receive and re-transmit at least one of the first and second signals having the first and second polarizations, respectively.

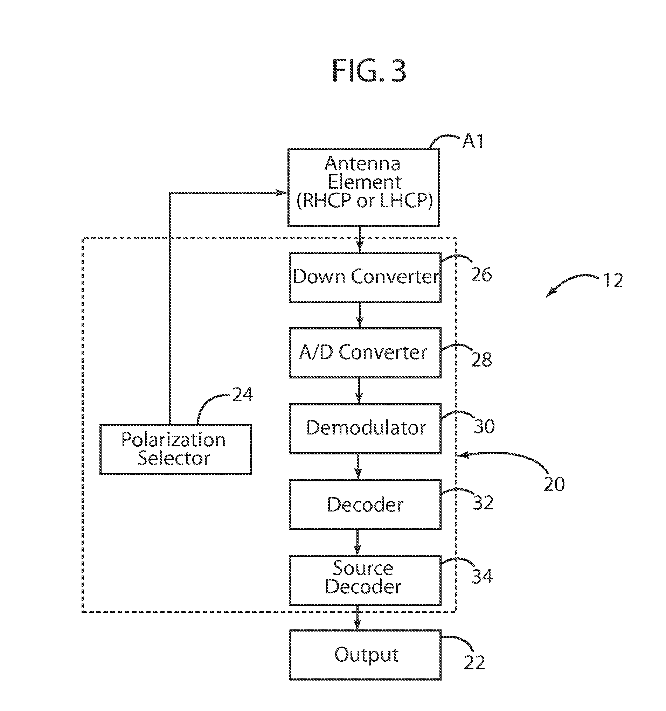

In regards to Fig. 3, the receiver device 12 can include the at least one antenna element A₁ and circuitry generally indicated at reference identifier 20 that is in communication with the antenna element A₁, according to one embodiment. Typically, the antenna element A₁ receives at least the first signal having the first polarization and a second signal having the second polarization, and the circuitry 20 is configured to process and emit an output 22 based upon at least one of the received first and second signals. By way of explanation and not limitation, the output 22 can be a video output, an audio output, the like, or a combination thereof. It should be appreciated by those skilled in the art that the at least one antenna element can include any number of suitable antenna elements (A₁,A₂,...A_{N}). According to one embodiment, at least one of the antenna elements (A₁,A₂,...A_{N}) is an omni directional antenna element without beam steering capabilities.

The receiver device 12 can further include a polarization selector 24 in communication with the antenna element A₁. Typically, the polarization selector 24 alters the polarization of the antenna element A₁, such that the antenna element A₁ is adapted to receive either the first signal having the first polarization or the second signal having the second polarization. By way of explanation and not limitation, the polarization selector 24 can select the polarization of the antenna element A₁ based upon the content desired by a user of the receiver device 12, such that the output varies based upon whether the first or second signal is received.

According to one embodiment, the first polarization is one of right hand circular polarization (RHCP) and left hand circular polarization (LHCP), and the second polarization is the other of RHCP and LHCP. However, it should be appreciated by those skilled in the art that other suitable polarizations can be implemented so long as the at least one antenna element (A₁,A₂,...A_{N}) can be configured to cross-polarize reject at least one of the first and second signals when it is desired to receive only one of the first and second signals.

Additionally, the receiver device 12 can include at least one down converter 26 and at least one analog-to-digital (A/D) converter 28. Typically, the down converter 26 down converts or reduces a frequency of a radio frequency (RF) signal that is received by the antenna element A₁ to a lower frequency for transmission through the receiver device 12, and the A/D converter 28 converts the analog signal received by the antenna element A₁ to a digital signal. The receiver device can further include a demodulator 30 in communication with the A/D converter 28 that is configured to demodulate the signal received by the antenna element A₁. Further, a decoder 32 can be in communication with the demodulator 30 and be configured to decode an output received from the demodulator 30, and a source decoder 34 can receive and decode an output of the decoder 32, such that the output 22 is emitted based upon the signal received by the antenna element A₁.

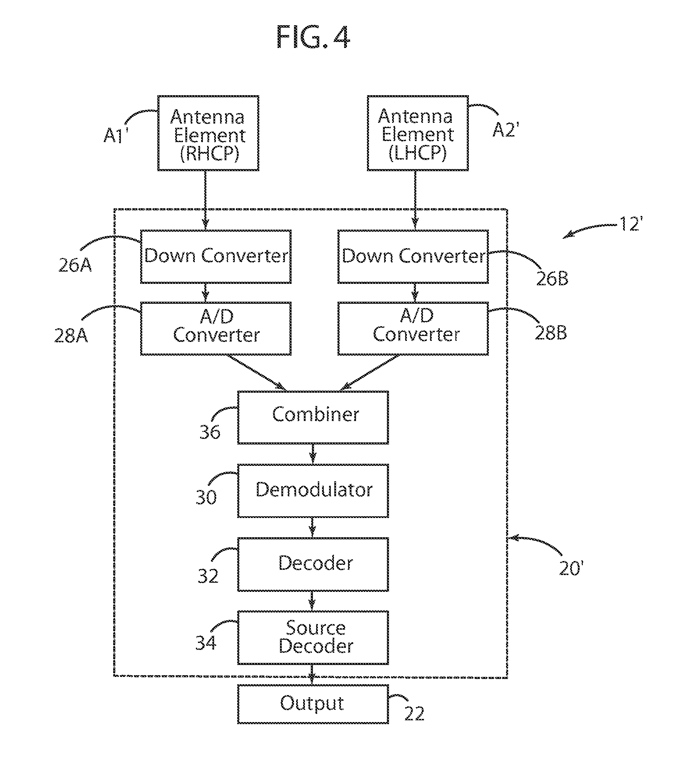

With respect to Fig. 4, an alternate embodiment of the receiver device is generally shown at 12'. The receiver device 12' can include at least one a first antenna element A₁' that is configured to receive the first signal having the first polarization, and a second element A₂' configured to receive the second signal having the second polarization substantially simultaneously. In such an embodiment, the first antenna A₁' is configured to cross-polarize reject the second signal due to the polarization of the second signal, the reception angle of the second signal, or a combination thereof, and the second antenna A₂' is configured to cross-polarize reject the first signal due to the polarization of the first signal, the reception angle of the first signal, or a combination thereof.

The receiver device 12' can include circuitry 20' that processes the received one or more signals and emits the output 22, according to one embodiment. The first signal having the first polarization can be communicated from the first antenna element A₁' to a first down converter 26A, and to a first A/D converter 28A. Additionally, the second signal having the second polarization received by the second antenna element A₂' is communicated from the second antenna element A₂' to a second down converter 26B and a second A/D converter 28B. The receiver device 12' can include a combiner 36 that receives the outputs from the first A/D converter 28A and the second A/D converter 28B.

According to one embodiment, the combiner 36 is a multiple-input and multiple-output (MIMO) combiner. Typically, the use of the MIMO combiner 36 results in multiple antennas being used to transmit the first and second signals and multiple antennas being used to receive the first and second signals. In such an embodiment, the use of the MIMO combiner 36 requires the data transmitted in the first and second signals to be precoded, spatially multiplexed, and diversity coded. Typically, when the first and second signals are precoded, the first and second signals are formed to increase the signal gain from constructive combining reduced multipath fading effects. The first and second signals are spatially multiplexed such that the high rate signals split into multiple lower rate streams, wherein each stream is transmitted into multiple lower rate streams, and each stream is transmitted from a different transmitted antenna into the same frequency channel. Thus, the first antenna element A₁' and second antenna element A₂' can be configured to receive the first and second signals having different polarizations, respectively, substantially simultaneous, and the MIMO combiner 36 can be configured to combine each of the satellite signals so that the output 22 can be emitted. The receiver device 12' can also include the demodulator 30, the decoder 32, and the source decoder 34.

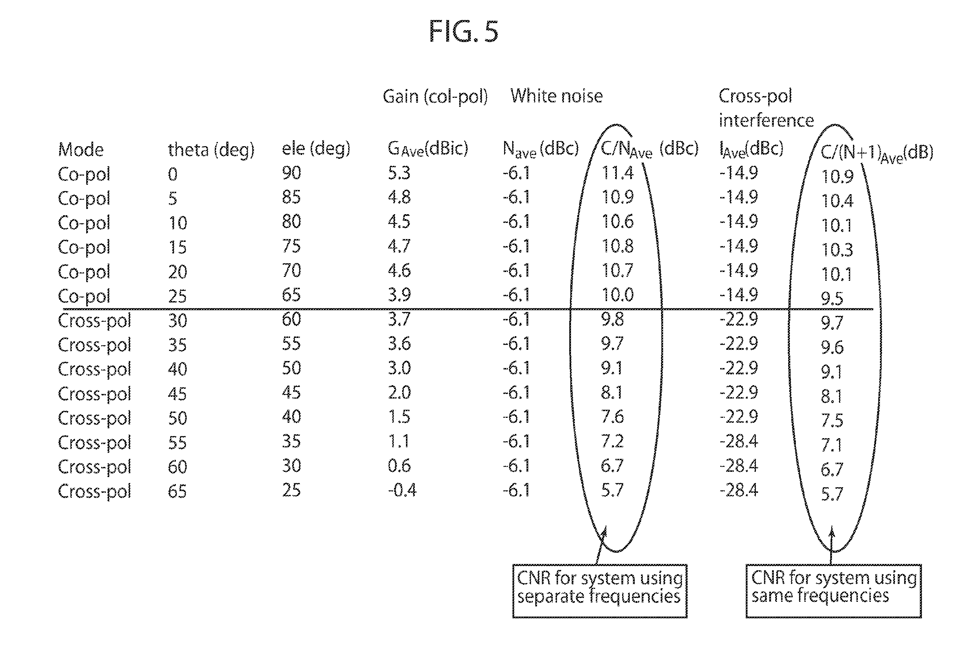

With respect to Figs. 1-5, Fig. 5 illustrates reception characteristics of signals having different polarizations and having different reception elevation angles with respect to the at least one antenna element (A₁,A₂,...A_{N}). According to one embodiment, the first signal includes high priority data, which can be, but is not limited to, a television broadcast, a radio broadcast, or the like, and the second signal is low priority data, which can be, but is not limited to, a traffic report, a weather report, or the like. According to one embodiment, high priority data is data that should generally be transmitted and received in substantially realtime, whereas low priority data can continue to be useable for a period of time after the initial transmission (e.g., a traffic report typically does not continuously instantaneously change).

Typically, the first satellite 16A having the greater elevation angle with respect to the at least one antenna element (A₁,A₂,...A_{N}) transmits the high priority data, and the second satellite 16B having the lower elevation angle with respect to the at least one antenna element (A₁,A₂,...A_{N}) transmits the low priority data. The first antenna element A₁,A₁' can have good cross-polarization rejection and higher gain due to the first signal having a different polarization and the reception elevation angle, and thus, the second single can be transmitted by the rising and/or falling second satellite 16B,16B', wherein the first and second signals have minimal interference with one another.

According to one embodiment, the first and second signals are broadcast or transmitted substantially simultaneously at substantially the same frequency. Thus, communications system 10 communicates additional data, while minimizing the frequency spectrum that is being occupied when compared to a communications system that transmits the high priority data and low priority data at different frequencies. It should be appreciated by those skilled in the art that the substantially the same frequency can be a single frequency or range of frequencies.

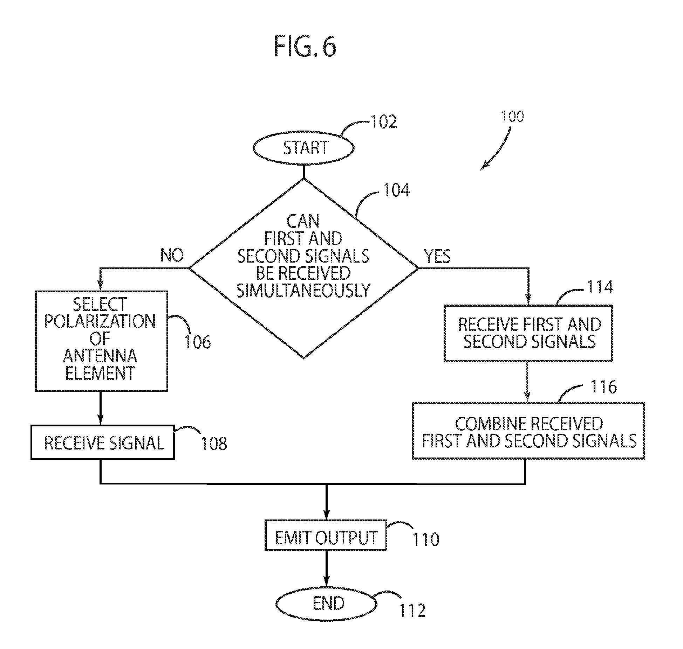

In regards to Figs. 1-4 and 6, a method for receiving a plurality of signals is generally shown, particularly in Fig. 6, at identifier 100. The method 100 starts at step 102, and then proceeds to decision step 104, wherein it is determined if the first and second signals can be received substantially simultaneously. If it is determined at decision step 104 that the first and second signals cannot be received substantially simultaneously, then the method 100 proceeds to step 106. At step 106, the polarization of the antenna element A₁ is selected, and at step 108, the signal corresponding to the selected polarization of the antenna element A₁ is received. At step 110, an output is emitted based upon the received signal, and the method 100 then ends at step 112.

However, if it is determined at decision step 104 that both the first and second signals can be received substantially simultaneously, then the method 100 proceeds to step 114. At step 114, both the first and second signals are received. At step 116, the received first and second signals are combined, and an output is emitted at step 110 based upon the combined first and second signals. The method 100 then ends at step 112.

By way of explanation and not limitation, the receiver device 12,12' can be used with a vehicle 38 (Fig. 1). However, it should be appreciated by those skilled in the art that the receiver device 12,12' can be other mobile devices, substantially stationary devices, the like, or a combination thereof. According to one embodiment, in operation, a user of the receiver device 12,12' selects content to be received and outputted by the receiver device 12,12', such that at least one of the first and second signals are to be received. Due to the polarization, the reception elevation angles, or a combination thereof of the first and second signals, different data or content can be transmitted on the first and second signals in order for the receiver device 12,12' to emit the desired output 22. Further, the first and second signals can be transmitted at substantially the same frequency to increase the spectral efficiency of the communications system 10.

Advantageously, the receiver device 12,12' and method 100 can receive the data transmitted in the first signal and the data transmitted in the second signal to enhance the output 22 without increasing the frequencies of the frequency spectrum that are being used by the communications system 10. Further, by using the second satellite 16B to transmit the second signal, which typically transmits the lower priority data, the user obtains the benefit of receiving the data transmitted in the second signal, wherein the second satellite 16B would otherwise be turned off due to the orbital location of the second satellite 16B in the orbital path 18. It should be appreciated by those skilled in the art that there may be additional or alternative advantages of the communications system 10 and method 100. It should further be appreciated by those skilled in the art that the above elements of the communications system 10 and receiver device 12,12' can be combined in alternative ways.

The above description is considered that of preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims, as interpreted according to the principles of patent law, including the doctrine of equivalents.

## Claims

1. A receiver device (12) comprising:
at least one antenna element (A₁...A_{N}) configured to receive at least a first signal having a first polarization and a second signal having a second polarization, wherein said first polarization is different than said second polarization; and
circuitry (20) in communication with said at least one antenna element (A₁...A_{N}), and configured to process and emit an output (22) based upon at least one of said received first and second signals, wherein said first signal is received at a first reception elevation angle with respect to said at least one antenna element (A₁...A_{N}) that is greater than a second reception elevation angle of said second signal with respect to said at least one antenna element (A₁...A_{N}), and said first and second signals are transmitted at substantially the same frequency.

2. The receiver device (12) of claim 1, wherein said circuitry (20) comprises a combiner (36) that combines said received first signal and said received second signal when said at least one antenna element (A₁...A_{N}) is configured to receive both said first and second signals.

3. The receiver device (12) of claim 1, wherein said circuitry (20) comprises a polarization selector (24) that alters a polarization of said at least one antenna element (A₁...A_{N}), such that said at least one antenna element (A₁...A_{N}) receives one of said first and second signals based upon said selected polarization.

4. The receiver device (12) of claims 1, 2, or 3, wherein said first signal is transmitted from a first satellite (16A) and said second signal is transmitted from a second satellite (16B) having a lower elevation angle with respect to said at least one antenna element (A₁...A_{N}) than said first satellite (16A).

5. The receiver device (12) of claim 4, wherein said first and second satellites (16A,16B) are highly elliptical orbiting (HEO) satellites.

6. The receiver device (12) of any one of the preceding claims, wherein said first polarization is one of right hand circular polarization (RHCP) and left hand circular polarization (LHCP), and said second polarization is the other of said RHCP and LHCP.

7. The receiver device (12) of any one of the preceding claims, wherein said output (22) is based upon only one of said first and second signals, such that the other of said first and second signals results in minimal interference in said output (22).

8. The receiver device (12) of any one of the preceding claims, wherein at least one said antenna element (A₁...A_{N}) is an omni directional antenna element without beam steering capabilities.

9. The receiver device (12) of any one of the preceding claims, wherein said receiver device is used with a vehicle (38).

10. A method (100) of receiving a plurality of signals, said method (100) comprising the steps of:
receiving (108,114) a first signal having a first polarization by at least one antenna element (A₁...A_{N});
receiving (108,114) a second signal having a second polarization that is different than said first polarization, wherein said first signal is received at a first reception elevation angle with respect to said at least one antenna element (A₁...A_{N}) that is greater than a second reception elevation angle of said second signal with respect to said at least one antenna element (A₁...A_{N}); and
emitting (110) an output (22) based upon at least one of said received first and second signals, wherein said first and second signals are transmitted at substantially the same frequency.

11. The method (100) of claim 10, further comprising the step of combining (116) said received first and second signals, such that said emitted (110) output (22) is based upon both said received first and second signals.

12. The method (100) of claim 10, further comprising the step of altering a polarization (106) of said at least one antenna element (A₁...A_{N}), such that said at least one antenna element (A₁...A_{N}) receives one of said first and second signals based upon said selected polarization.

13. The method (100) of claims 10, 11, or 12, wherein said first polarization is one of right hand circular polarization (RHCP) and left hand circular polarization (LHCP), and said second polarization is the other of said RHCP and said LHCP.

14. The method (100) of any one of the preceding claims, wherein said output (22) is based upon only one of said first and second signals, such that the other of said first and second signals result in minimal interference in said output (22).

15. The method (100) of any one of the preceding claims, wherein at least one said antenna element (A₁...A_{N}) is an omni directional antenna element without beam steering capabilities.
